## Europäisches Patentamt
## European Patent Office
## Office européen des brevets

(19)

(11) Numéro de publication: **0 179 688**
**B1**

(12) **FASCICULE DE BREVET EUROPEEN**

(45) Date de publication du fascicule du brevet:
**07.12.88**

(51) Int. Cl.⁴: **B 29 B 15/12**, B 29 C 67/14

(21) Numéro de dépôt: **85401836.3**

(22) Date de dépôt: **23.09.85**

(54) **Procédé de préparation de matériaux composites et produits obtenus.**

(30) Priorité: **26.09.84 FR 8414800**

(43) Date de publication de la demande:
**30.04.86 Bulletin 86/18**

(45) Mention de la délivrance du brevet:
**07.12.88 Bulletin 88/49**

(84) Etats contractants désignés:
**AT BE CH DE FR GB IT LI LU NL SE**

(56) Documents cités:
**DE-A- 1 460 465**
**DE-B- 2 022 164**
**GB-A- 1 296 686**
**US-A- 3 073 732**
**US-A- 3 626 041**
**US-A- 3 771 202**
**US-A- 3 919 437**

(73) Titulaire: **Pradom Limited, 70 Finsbury Pavement,
London EC2A 1SX (GB)**

(72) Inventeur: **Berger, Michel, 104 La Lande, F-33 480 Sainte
Helene (FR)**

(74) Mandataire: **Combe, André et al, CABINET BEAU DE
LOMENIE 55, rue d'Amsterdam, F-75008 Paris (FR)**

EP 0 179 688 B1

## Description

La présente invention concerne un procédé de préparation de matériaux composites selon le préambule de la revendication 1. Un procédé de ce genre est connu du document US-A-3 919 437.

Les matériaux composites sont des matériaux constitués d'éléments de renforcement (le plus souvent des fibres – ou fils – telles que fibres de verre, fibres de carbone, fibres de bore ou fibres de polyamid . . .) et d'une matrice (qui peut être constituée soit par une résine soit par un matériau résistant du type métal ou céramique).

On sait que les propriétés des matériaux composites dépendent en particulier:

– de l'orientation des éléments de renforcement;

– de la bonne distribution de la matrice dans l'ensemble du volume entre ces éléments de renforcement;

– et des liaisons que l'on est susceptible d'induire entre lesdits éléments de renforcement et ladite matrice.

Il est donc souhaitable de disposer d'une technique permettant d'agir sur ces divers paramètres de façon à pouvoir optimiser les propriétés du produit en fonction du but recherché. C'est là le but de la présente invention.

Pour tenter de réaliser cet objectif, on a déjà préconisé dans le brevet US 3 919 437 de réaliser l'imprégnation des fibres de renforcement par le matériau matrice alors que lesdites fibres et ledit matériau matrice sont soumis à un champ électrostatique; le procédé décrit consiste à créer ledit champ électrostatique entre l'ensemble des fibres rendues conductrices par imprégnation d'eau et une électrode et à réaliser l'imprégnation desdites fibres à l'aide d'un matériau matrice en poudre pendant ce passage dans ledit champ de façon à ce que les particules dudit matériau matrice soient également chargées électriquement.

Ce procédé s'est révélé d'une part très limité dans son application puisque le matériau matrice doit se trouver à l'état solide et d'autre part très difficile à mettre en œuvre du fait qu'il faut réaliser simultanément les deux opérations de mise sous tension et d'imprégnation.

La présente invention vise à surmonter ces difficultés en utilisant des champs électrostatiques de très haute tension, en n'utilisant pas la fibre de renforcement comme électrode et en ne réalisant l'opération d'imprégnation des fibres par le matériau matrice ou précurseur de matrice que lorsque lesdites fibres sont sorties du champ électrostatique.

La présente invention concerne donc un procédé de préparation de matériau composite par imprégnation, à l'aide d'une matrice ou d'un précurseur de matrice, d'éléments de renforcement constitués par des fibres en un matériau diélectrique, lesdites fibres étant soumises à un champ électrostatique intense, procédé caractérisé en ce que:

– lesdites fibres sont soumises à au moins un champ électrostatique intense par passage entre deux électrodes,

– puis que les fibres, après avoir été retirées dudit champ électrostatique sont imprégnées par ladite matrice ou par ledit matériau précurseur de matrice.

Par champ électrostatique induit par un courant à très haute tension on entend un champ au moins égal à celui obtenu par application, entre deux électrodes distantes de 20 mm, d'une tension égale à au moins 20 000$^V$ en courant alternatif et au moins 40 000$^V$ en courant continu. Les éléments de renforcement, notamment les fibres, fibrilles, mèches utilisées sont ainsi disposés entre les électrodes soumises à très haute tension.

Ainsi les fibres utilisées comme élément de renforcement selon l'invention peuvent être quelconque. Cependant, il faut qu'elles soient en un matériau diélectrique c'est-à-dire, en un matériau qui, sous l'influence du champ, se charge électriquement et conserve ladite charge pendant une certaine durée. C'est le cas notamment pour les fibres de polyamine (type NYLON ou KEVLAR) pour les fibres de verre, pour les fibres en certains oxydes métalliques, pour des fibres en matériaux complexes (métaloxyde) et pour les fibres de carbone. Les fibres conductrices, comme par exemple les fibres métalliques ou métallisées en surface, sont par contre plus difficiles à utiliser selon l'invention.

Les fibres de renforcement sont disposées entre les électrodes, la très haute tension est appliquée entre ces électrodes pendant un temps suffisant pour charger lesdites fibres puis, les fibres chargées, sorties du champ, sont imprégnées par le matériau matrice ou un matériau précurseur du matériau matrice se trouvant sous forme liquide.

Comme ces fibres chargées ont tendance à se repousser mutuellement on obtient au sortir du champ un lit de fibres dont l'épaisseur est de 2 à 4 fois l'épaisseur du lit de fibres initialement introduit entre les électrodes, et il convient d'imprégner les fibres alors qu'elles sont précisément dans cet état «gonflé».

Le matériau matrice peut être n'importe lequel des matériaux matrices connus et utilisés. On peut utiliser des résines (résines époxy ou polyamide ou mélanges carbonés que l'on durcit) ou des mélanges siliceux susceptibles de former des céramiques, des métaux.

Lorsque les fibres auront été imprégnées par le matériau matrice liquide (ou un précurseur liquide dudit matériau) le produit obtenu pourra être soit vendu sous cette forme (généralement après une première solidification), soit transformé par moulage et solidification de la matrice. Bien évidemment, comme connu, la matrice peut comporter elle-même des charges.

Il a été constaté que lorsqu'on met en œuvre le procédé selon l'invention, les éléments de renforcement (fibres) sont parfaitement imprégnées de matrice.

Mais de plus, on peut apporter au procédé selon l'invention certains aménagements spécialement intéressants.

Si le champ électrostatique est réalisé à l'aide d'un courant continu, on a constaté que, outre le phénomène de gonflement du faisceau de fibres initiales, il se produit une orientation complémentaire desdites fibres. Cette orientation va ainsi permettre la préparation d'un matériau composite ayant des propriétés spécifiques.

On peut également, comme connu, obtenir pour certaines fibres cette même orientation par l'utilisation simultanée ou préalable d'un autre champ tel que par exemple un champ magnétique.

Si le champ électrostatique est réalisé à l'aide d'un courant alternatif, on a constaté que, outre le phénomène de gonflement du faisceau des fibres décrit ci-dessus, il se produit entre les fibrilles des décharges localisées qui provoquent, essentiellement en présence d'oxygène, une modification de la surface des fibres. Cette modification (qui est probablement une oxydation) est favorable aux propriétés du matériau final dans la mesure où elle permet de réaliser une liaison plus solide entre la fibre et la matrice.

On peut bien entendu, selon l'invention, utiliser successivement un champ électrostatique à courant alternatif (gonflement et traitement de surface) et un champ électrostatique à courant continu (gonflement et orientation).

Dans l'exemple non limitatif suivant, lequel se réfère aux figures 1 à 9, on décrit un appareil utilisable pour mettre en œuvre l'invention et les matériaux de renforcement obtenus.

Un boîtier en matière isolante 1 (fig. 1) positionné sur des pieds isolants 2 contient intérieurement, positionnés entre les cales 3 et posés sur un fond isolant 4: une première électrode inférieure sous formé de plaque 5, un premier diélectrique 6, un espace 7, un deuxième diélectrique 8 et une deuxième électrode 9 également sous forme de plaque. Entre les deux diélectriques est placé le réseau fibreux 10. Les deux électrodes 5 et 9 sont reliées à un générateur (ici fig. 1) de courant continu d'une tension d'environ 100 000 volts. L'ensemble est mis sous tension environ 10 mn pour un ensemble de fibrilles de 5 à 6 mm d'épaisseur et l'on voit (fig. 2) le réseau avant la mise en tension et (fig. 3) le même réseau de fibrilles après les 10 mn de traitement.

On constate, après de nombreuses expériences, que le volume a pratiquement doublé ce qui, bien entendu, double le volume interfibrilles, le volume de ces dernières étant stable.

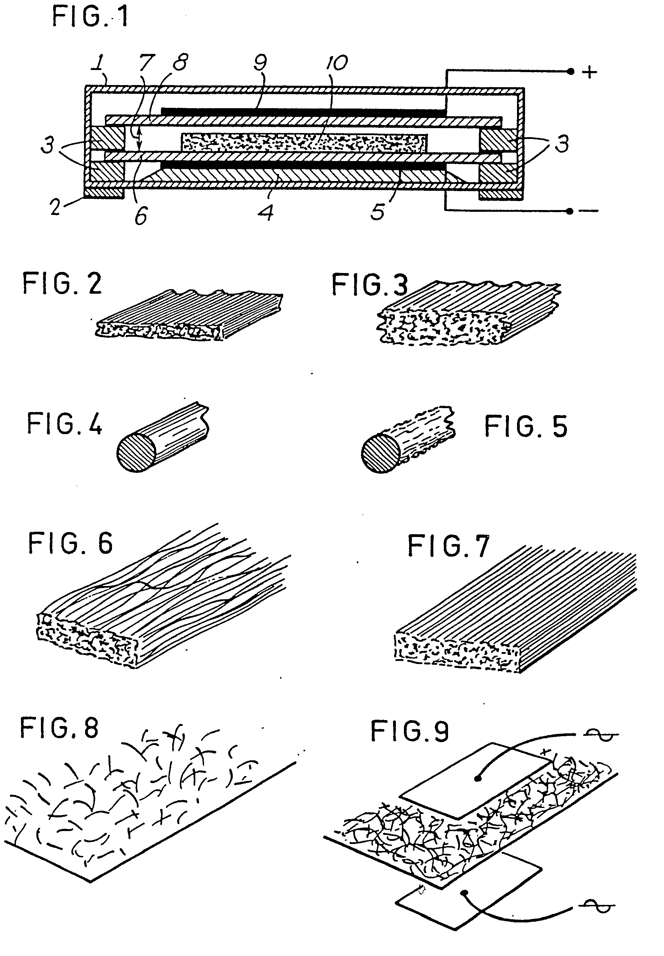

(Fig. 4) on voit une microscopie d'une fibrille avant le même traitement et (fig. 5) la même fibrille dépolie après le traitement.

Sur un plan pratique, il a été constaté que le fait de soumettre à un premier champ alternatif l'ensemble du réseau de fibrilles pour obtenir un mordançage plus efficace en courant alternatif puis de le soumettre à un champ continu pour avoir une dilatation est très favorable à l'obtention d'un réseau dépoli, dilaté et rangé. Effectivement, comme effet tertiaire, on s'aperçoit qu'un réseau assez mal ordonnancé, représenté fig. 6, devient parfaitement ordonnancé après le traitement en champ électrostatique continu haute tension comme représenté fig. 7.

Une autre application, en courant alternatif cette fois, consiste à injecter des fibres courtes entre les deux électrodes, comme représenté fig. 8 et soumises à un champ alternatif haute tension, comme représenté fig. 9. On s'aperçoit que l'on obtient à ce moment-là un réseau de fibres courtes rangées d'une manière anarchique mais homogène, ce qui est très favorable dans le cas de composites à fibres courtes car l'ordonnancement donne toujours des points de rupture, donc des points faibles.

## Revendications

1. Procédé de préparation de matériau composite par imprégnation, à l'aide d'une matrice ou d'un précurseur de matrice et d'éléments de renforcement constitués par des fibres en un matériau diélectrique, lesdites fibres étant soumises à un champ électrostatique intense, procédé caractérisé en ce que:

   – lesdites fibres sont soumises à au moins un champ électrostatique intense par passage entre deux électrodes,

   – puis que les fibres, après avoir été retirées dudit champ électrostatique sont imprégnées par ladite matrice ou par ledit matériau précurseur de matrice.

2. Procédé selon la revendication 1, caractérisé en ce que ledit champ électrostatique intense est généré, entre deux électrodes, par un courant alternatif, ledit champ étant au moins égal au champ électrostatique produit entre deux électrodes distantes de 20 mm par un courant alternatif de 20 000$^v$.

3. Procédé selon la revendication 1, caractérisé en ce que lesdites fibres sont soumises successivement:

   – à un champ électrostatique intense généré, entre deux électrodes, par un courant alternatif, ledit champ étant au moins égal au champ électrostatique produit entre deux électrodes distantes de 20 mm par un courant alternatif de 20 000$^v$,

   – puis à un champ électrostatique produit, entre deux électrodes, par un courant continu, ledit champ étant au moins égal au champ électrostatique produit entre deux électrodes distantes de 20 mm par un courant continu de 40 000$^v$.

4. Procédé selon la revendication 1, caractérisé en ce que ledit champ électrostatique intense est généré, entre deux électrodes, par un courant continu, ledit champ étant au moins égal au champ électrostatique produit entre deux électrodes distantes de 20 mm par un courant continu de 40 000$^v$.

5. Procédé selon la revendication 1, caractérisé en ce que lesdites fibres sont soumises successivement:

   – à un champ électrostatique généré, entre deux électrodes, par un courant continu, ledit champ étant au moins égal au champ électrostatique produit entre deux électrodes distantes de 20 mm par un courant continu de 40 000$^v$,

   – puis à un champ électrostatique produit entre deux électrodes par un courant alternatif, ledit champ étant au moins égal au champ électrostatique produit entre deux électrodes distantes de 20 mm par un courant alternatif de 20 000ᵛ.

**Patentansprüche**

1. Verfahren zur Herstellung von Verbundmaterial durch Imprägnierung mit Hilfe einer Matrix oder einer Vormatrix und von Verstärkungselementen, bestehend aus Fasern aus dielektrischem Material, welche Fasern einem starken elektrostatischen Feld unterworfen werden, welches Verfahren dadurch gekennzeichnet ist, dass:
   – die Fasern mindestens einem starken elektrostatischen Feld durch Durchzug zwischen zwei Elektroden unterworfen werden,
   – und dass dann die Fasern, nachdem sie aus dem elektrostatischen Feld entfernt worden sind, mit der Matrix oder mit dem Vormatrix-Material imprägniert werden.

2. Verfahren nach Anspruch 1, dadurch gekennzeichnet, dass das starke elektrostatische Feld zwischen zwei Elektroden von einem Wechselstrom erzeugt wird, wobei das Feld mindestens gleich ist dem elektrostatischen Feld, das zwischen zwei im Abstand von 20 mm befindlichen Elektroden von einem Wechselstrom mit 20 000 V erzeugt wird.

3. Verfahren nach Anspruch 1, dadurch gekennzeichnet, dass die Fasern nacheinander folgendem unterworfen werden:
   – einem starken elektrostatischen Feld, das zwischen zwei Elektroden von einem Wechselstrom erzeugt wird, wobei das Feld mindestens gleich ist dem elektrostatischen Feld, das zwischen zwei in einem Abstand von 20 mm befindlichen Elektroden von einem Wechselstrom mit 20 000 V erzeugt wird,
   – und dann einem elektrostatischen Feld, das zwischen zwei Elektroden von einem Gleichstrom erzeugt wird, wobei das Feld mindestens gleich ist einem elektrostatischen Feld, das zwischen zwei in einem Abstand von 20 mm befindlichen Elektroden von einem Gleichstrom mit 40 000 V erzeugt wird.

4. Verfahren nach Anspruch 1, dadurch gekennzeichnet, dass das starke elektrostatische Feld zwischen zwei Elektroden von einem Gleichstrom erzeugt wird, wobei das Feld mindestens gleich ist dem elektrostatischen Feld, das zwischen zwei in einem Abstand von 20 mm befindlichen Elektroden von einem Gleichstrom mit 40 000 V erzeugt wird.

5. Verfahren nach Anspruch 1, dadurch gekennzeichnet, dass die Fasern nacheinander folgendem unterworfen werden:
   – einem elektrostatischen Feld, das zwischen zwei Elektroden von einem Gleichstrom erzeugt wird, wobei das Feld mindestens gleich ist dem elektrostatischen Feld, das zwischen zwei in einem Abstand von 20 mm befindlichen Elektroden von einem Gleichstrom mit 40 000 V erzeugt wird,
   – und dann einem elektrostatischen Feld, das zwischen zwei Elektroden von einem Wechselstrom erzeugt wird, wobei das Feld mindestens gleich ist dem elektrostatischen Feld, das zwischen zwei in einem Abstand von 20 mm befindlichen Elektroden von einem Wechselstrom mit 20 000 V erzeugt wird.

**Claims**

1. Process for preparing composite material by impregnation, with a matrix or a matrix precursor and reinforcing elements constituted of fibers in a dielectric material, said fibers being subjected to an intense electrostatic field, process characterized in that:
   – said fibers are subjected to at least one intense electrostatic field, by being passed between two electrodes,
   – then the fibers, after having been withdrawn from said electrostatic field, are impregnated with said matrix or with said matrix precursor material.

2. Process according to claim 1, characterized in that said intense electrostatic field is generated, between two electrodes, by an alternating current, said field being at least equal to the electrostatic field produced by two electrodes 20 mm apart by an alternating current of 20 000 V.

3. Process according to claim 1, characterized in that said fibers are successively subjected:
   – to an intense electrostatic field generated, between two electrodes, by an alternating current, said field being at least equal to the electrostatic field produced between two electrodes 20 mm apart by an alternating current of 20 000 V,
   – then to an electrostatic field produced, between two electrodes, by a continuous current, said field being at least equal to the electrostatic field produced between two electrodes 20 mm apart by a continuous current of 40 000 V.

4. Process according to claim 1, characterized in that said intense electrostatic field is generated, between two electrodes, by a continuous current, said field being at least equal to the electrostatic field produced between two electrodes 20 mm apart by a continuous current of 40 000 V.

5. Process according to claim 1, characterized in that said fibers are successively subjected:
   – to an electrostatic field generated, between two electrodes, by a continuous current, said field being at least equal to the electrostatic field produced between two electrodes 20 mm apart by a continuous current of 40 000 V,
   – then to an electrostatic field produced between two electrodes by an alternating current, said field being at least equal to the electrostatic field produced between two electrodes 20 mm apart by an alternating current of 20 000 V.

1/1

FIG.1

FIG. 2

FIG.3

FIG.4

FIG. 5

FIG. 6

FIG.7

FIG. 8

FIG.9